# EUROPEAN PATENT APPLICATION

(11) **EP 3 468 105 A1**
(43) Date of publication of application: **10.04.2019**
(21) Application number: 16906794.9
(22) Date of filing: 30.06.2016
(51) Int. Cl.: H04L 12/46

(54) **METHOD AND APPARATUS FOR ARRANGING NETWORK RESOURCES**

(71) Applicant: Huawei Technologies Co., Ltd., Longgang District Shenzhen, Guangdong 518129 (CN)
(72) Inventor: XU, Ruiyue, Shenzhen Guangdong 518129 (CN); ZOU, Lan, Shenzhen Guangdong 518129 (CN)
(74) Representative: Goddar, Heinz J.
(86) International application number: PCT/CN2016/088037
(87) International publication number: WO 2018/000394

(57) **Abstract**

Embodiments of the present invention relate to the communications field, and provide a network resource orchestration method and a device. The method includes: receiving, by a first management unit, information about a network resource from a second management unit, where the information about the network resource includes capability information of the network resource, and the capability information of the network resource is used to indicate a function or a feature of the network resource; and performing, by the first management unit, network resource orchestration based on the information about the network resource. In solutions in the embodiments of the present invention, the first management unit receives the information about the network resource including the capability information of the network resource from the second management unit, and performs network resource orchestration based on the information about the network resource, thereby implementing automatic network resource orchestration and improving network resource orchestration efficiency.

## Description

### TECHNICAL FIELD

Embodiments of the present invention relate to communications technologies, and in particular, to a network resource orchestration method and a device.

### BACKGROUND

A network function virtualization (Network Function Virtualization, NFV for short) technology implements many functions of software processing by using commodity hardware and a virtualization technology, to reduce high device costs of a network.

An indicator of an NFV system is fast service deployment. Service deployment refers to allocation of a network resource (also referred to as a network function) satisfying a requirement to a service. The network resource includes a plurality of network elements having different network functions. In the prior art, network resource orchestration relies on manual analysis. Therefore, efficiency is relatively low and a requirement of fast service deployment cannot be satisfied.

### SUMMARY

Embodiments of the present invention provide a network resource orchestration method and a device, to improve network resource orchestration efficiency and satisfy a requirement of fast service deployment.

According to an aspect, an embodiment of the present invention provides a network resource orchestration method. The method includes: A second management unit sends information about a network resource to a first management unit. For example, the second management unit sends the information about the network resource by using a registration request message, or the second management unit sends the information about the network resource by using a query response message. Correspondingly, the first management unit receives the information about the network resource from the second management unit, and performs network resource orchestration based on the information about the network resource. The information about the network resource includes capability information of the network resource, and the capability information of the network resource is used to indicate a function or a feature of the network resource. For example, the capability information of the network resource may be a capability identifier of the network resource or capability description information of the network resource. Optionally, the information about the network resource further includes at least one of the following information: an identifier of the network resource, status information of the network resource, or usage information of the network resource. In the solutions in the embodiments of the present invention, the first management unit receives the information about the network resource including the capability information of the network resource from the second management unit, and performs network resource orchestration based on the information about the network resource, thereby implementing automatic network resource orchestration, improving network resource orchestration efficiency, and satisfying a requirement of fast service deployment.

In a possible design, the second management unit may send a registration request message to the first management unit, where the registration request message is used to register the network resource, and the registration request message includes the information about the network resource. Correspondingly, the first management unit receives the registration request message, and obtains the information about the network resource from the registration request message.

In a possible design, the first management unit may send a query request message to the second management unit, where the query request message is used to request the information about the network resource. The second management unit determines the information about the network resource based on the query request message, and sends a query response message to the first management unit, where the query response message includes the information about the network resource. The first management unit receives the query response message, and obtains the information about the network resource from the query response message. Optionally, the query request message includes the capability information of the network resource, to determine the information about the network resource. For example, after receiving the query request message, the second management unit determines, based on the capability information, the information about the network resource that satisfies a condition.

In a possible design, the first management unit may determine, based on a service requirement and the information about the network resource, an identifier of a target network resource satisfying the service requirement or capability information of the target network resource; and then the first management unit sends an instance obtaining request message to the second management unit. The instance obtaining request message includes the identifier of the target network resource or the capability information of the target network resource, and the instance obtaining request message is used to request a target instance that is corresponding to the identifier of the target network resource or the capability information of the target network resource. Correspondingly, the second management unit receives the instance obtaining request message, and determines, based on the identifier of the target network resource or the capability information of the target network resource, the target instance satisfying a condition. For example, the second management unit first determines whether already deployed instances include the target instance satisfying the condition. If the already deployed instances include no target instance satisfying the condition, the second management unit requests to deploy a new target instance satisfying the condition. The second management unit adds information about the target instance to an instance obtaining response message, and sends the instance obtaining response message to the first management unit. The information about the target instance includes, for example, an identifier of the target instance.

In a possible design, the first management unit may be deployed as a separate functional entity, or the first management unit may be deployed as a functional module of another functional entity, or a function of the first management unit may be integrated in another functional entity. Similarly, the second management unit may be deployed as a separate functional entity, or the second management unit may be deployed as a functional module of another functional entity, or a function of the second management unit may be integrated in another functional entity. Further, the first management unit and the second management unit may be combined as an integrated configuration entity, and the integrated configuration entity has the function of the first management unit and the function of the second management unit. The first management unit may be an NO, an SO, an NM, an NFVO, or an NF controller. The second management unit may be an NO, an NM, an EM, or a VNFM. For example, when the first management unit is an NO or an SO, the second management unit is an NM, an NFVO, or an EM. For another example, when the first management unit is an NM, the second management unit is an EM, an NF controller, or a VNFM. For another example, when the first management unit is an NFVO, the second management unit is a VNF, an EM, or an NF controller.

According to another aspect, an embodiment of the present invention provides a first management unit. The first management unit may implement the functions performed by the first management unit in the method example, and the functions may be implemented by hardware or may be implemented by hardware executing corresponding software. The hardware or the software includes one or more modules corresponding to the functions.

In a possible design, a structure of the first management unit includes a processor and a communications interface. The processor is configured to support the first management unit in performing a corresponding function in the foregoing method. The communications interface is configured to support the first management unit in communicating with another network element. The first management unit may further include a memory, and the memory is configured to couple to the processor and store a program instruction and data necessary to the apparatus.

According to still another aspect, an embodiment of the present invention provides a second management unit. The second management unit may implement the functions performed by the second management unit in the method example, and the functions may be implemented by hardware or may be implemented by hardware executing corresponding software. The hardware or the software includes one or more modules corresponding to the functions.

In a possible design, a structure of the second management unit includes a processor and a communications interface. The processor is configured to support the second management unit in performing a corresponding function in the foregoing method. The communications interface is configured to support the second management unit in communicating with another network element. The second management unit may further include a memory, and the memory is configured to couple to the processor and store a program instruction and data necessary to the apparatus.

According to yet another aspect, an embodiment of the present invention provides a communications system. The system includes the first management unit and the second management unit according to the foregoing aspects.

According to still yet another aspect, an embodiment of the present invention provides a computer storage medium. The computer storage medium is configured to store a computer software instruction used by the foregoing first management unit, and includes a program designed for executing the foregoing aspects.

According to still yet another aspect, an embodiment of the present invention provides a computer storage medium. The computer storage medium is configured to store a computer software instruction used by the foregoing second management unit, and includes a program designed for executing the foregoing aspects.

Compared with the prior art, in the solutions provided in the embodiments of the present invention, the first management unit receives the information about the network resource from the second management unit, where the information about the network resource includes the capability information of the network resource, and the first management unit performs network resource orchestration based on the information about the network resource, thereby implementing automatic network resource orchestration and improving network resource orchestration efficiency.

### BRIEF DESCRIPTION OF DRAWINGS

FIG. 1 shows a possible network architecture according to an embodiment of the present invention;
FIG. 2 is a schematic flowchart of a network resource orchestration method according to Embodiment 1 of the present invention;
FIG. 3 is a schematic diagram of capability information of a network resource;
FIG. 4 is a schematic communication diagram of a method for obtaining information about a network resource according to Embodiment 2 of the present invention;
FIG. 5 is a schematic communication diagram of a method for obtaining information about a network resource according to Embodiment 3 of the present invention;
FIG. 6 is a schematic communication diagram of a network resource orchestration method according to Embodiment 4 of the present invention;
FIG. 7 is a schematic structural diagram of a first management unit according to an embodiment of the present invention;
FIG. 8 is a schematic structural diagram of another first management unit according to an embodiment of the present invention;
FIG. 9 is a schematic structural diagram of a second management unit according to an embodiment of the present invention; and
FIG. 10 is a schematic structural diagram of another second management unit according to an embodiment of the present invention.

### DESCRIPTION OF EMBODIMENTS

To make the purpose, technical solutions, and advantages of the embodiments of the present invention clearer, the following describes the technical solutions of the embodiments of the present invention with reference to the accompanying drawings in the embodiments of the present invention.

Network architectures and service scenarios described in the embodiments of the present invention aim to describe the technical solutions in the embodiments of the present invention more clearly, but are not intended to limit the technical solutions provided in the embodiments of the present invention. A person of ordinary skill in the art may know that, as the network architectures evolve and a new service scenario emerges, the technical solutions provided in the embodiments of the present invention are also applicable to a similar technical problem.

The technical solutions provided in the embodiments of the present invention may be applied to a network management system. The network management system may include a network function virtualization (Network Function Virtualization, NFV) system, or may not include an NFV system. The embodiments of the present invention use a network management system including an NFV system, that is, an NFV-based network management system as an example for description.

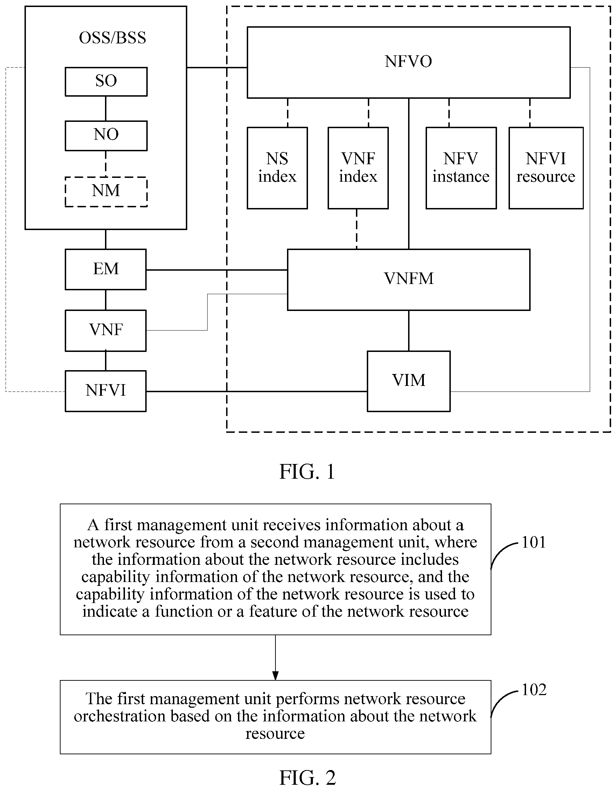

FIG. 1 shows a possible network architecture according to an embodiment of the present invention. The network architecture is an NFV-based network architecture. A conventional network architecture usually uses an independent service network and an independent operations support system. Compared with the conventional network architecture, an NFV technology destructs a network architecture longitudinally and transversely. As shown in FIG. 1, a network architecture in an NFV environment is divided into three layers longitudinally:

Infrastructure layer: A network function virtualization infrastructure (NFV Infrastructure, NFVI) may be understood as a resource pool from the perspective of cloud computing. Mapping the NFVI to a physical infrastructure means connecting a plurality of geographically-dispersed data centers by using a high-speed communications network. The NFVI needs to convert a physical computing/storage/exchange resource into a virtual computing/storage/exchange resource pool by virtualization.

Virtual network layer: A virtual network layer corresponds to each current telecommunication service network. Each physical network element is mapped to a virtual network function (Virtualized Network Function, VNF) unit. A resource required by a VNF unit needs to be divided into a virtual computing/storage/exchange resource and is carried by an NFVI. A signaling interface defined in a conventional network may be used as an interface between VNF units.

Service management layer: A service management layer includes an operations support system (Operations Support System, OSS)/business support system (Business support system, BSS) and a network element manager (Element Manager, EM), and needs to perform necessary modification and adjustment for virtualization. Optionally, the OSS/BSS may include a network manager (Network Manager, NM). For ease of description, the network manager may be described as an NM unit or an NM below.

A network architecture in an NFV environment is divided into two domains transversely:

Service network domain: The service network domain corresponds to various current telecommunication service networks.

Resource management and orchestration (Management and Orchestration, MANO) domain: Compared with a conventional network, a resource management and orchestration domain is added in an NFV environment, and is responsible for management and orchestration of entire NFVI resources, mapping and association of a service network and an NFVI resource, OSS service resource procedure implementation, and the like. Three units of a virtualized infrastructure manager (Virtualized Infrastructure Manager, VIM) unit, a virtual network function manager (VNF Manager, VNFM) unit, and a network function virtualization orchestrator (NFV Orchestrator, NFVO) unit are included inside the MANO, and separately complete management of three levels on a network service (Network Service, NS) provided by an NFVI, a VNF unit, and a service network. Optionally, the resource management and orchestration domain may further include an NS index, a VNF index, an NFV instance, an NFVI resource, and the like.

As shown in FIG. 1, two logical units are introduced in the solutions in the embodiments of the present invention: a service orchestrator (Service Orchestrator, SO) unit and a network orchestrator (Network Orchestrator, NO) unit. For ease of description, the service orchestrator unit may be described as an SO unit or an SO, and the network orchestrator unit may be described as an NO unit or an NO below. In this embodiment of the present invention, the SO may be deployed as a separate functional entity, or the SO may be deployed as a functional module of another functional entity, or a function of the SO may be integrated in another functional entity. Similarly, in this embodiment of the present invention, the NO may be deployed as a separate functional entity, or the NO may be deployed as a functional module of another functional entity, or a function of the NO may be integrated in another functional entity. Further, the SO and the NO may be combined as an integrated configuration entity, and the integrated configuration entity has the function of the SO and the function of the NO. For example, the integrated configuration entity may be referred to as a service and network orchestrator unit. It may be understood that the integrated configuration entity may further have another name. This is not limited in the embodiments of the present invention. Similarly, for the integrated configuration entity, in this embodiment of the present invention, the integrated configuration entity may be deployed as a separate functional entity, or the integrated configuration entity may be deployed as a functional module of another functional entity, or a function of the integrated configuration entity may be integrated in another functional entity.

The function of the SO includes, but is not limited only to: lifecycle management (for example, instantiation or creation, scale-out and scale-in, or update) on a service (service) based on a service request message sent by a BSS, service aggregation, service management (for example, fault, configuration, accounting, performance, security (Fault, Configuration, Accounting, Performance, Security, FCAPS) management), and mapping between a service and a network slice (network slice). The service may be a communications service that is of a specified service level agreement (Service level agreement, SLA) and that can be possessed by a group of users, for example, a mobile broadband (Mobile Broadband, MBB) service and a voice and Internet of Things (Internet of Things, IOT) service (for example, intelligent parking and intelligent meter reading).

The network slice may be a communication resource that ensures that a bearer service or a service can reach an SLA requirement, or may be considered as a combination of a network function and a communication resource that are required to complete a service or some services.

The function of the NO includes, but is not limited only to: network slice management (for example, lifecycle management, FCAPS management, and network slice template management), network function (Network Function, NF) management, and mapping between a network slice and a network function; coordination between different types of network resources; coordination between different operators and between network resources provided by different network providers; unified orchestration of network devices provided by different providers, so that network resources provided by different network providers can satisfy a requirement (for example, an SLA requirement, a key performance indicator (Key Performance Indicator, KPI) requirement, and quality of service (Quality of Service, QoS)) of a target service; and provision of an application programming interface (Application Programing Interface, API) to the outside. The API is used to provide a network function for a third party and implement cross-operator deployment.

In an example, lifecycle management on a network slice by the NO includes network slice or network creation, deletion, update, and the like; and network slice template management by the NO includes network slice template or network template creation, update, deletion, activation and deactivation, and the like.

In the network architecture shown in FIG. 1, the SO and the NO are separately disposed and the SO and the NO are both disposed in the OSS/BSS. It should be noted that FIG. 1 shows only an example of disposing the SO and the NO, and the SO and the NO may alternatively be disposed in another manner. For example, both are disposed outside the OSS/BSS. For another example, the SO is disposed inside the OSS/BSS and the NO is disposed outside the NO. Alternatively, the SO and the NO may be combined as an integrated configuration entity, and the integrated configuration entity may be disposed inside the OSS/BSS or outside the OSS/BSS.

The following describes the technical solutions in the embodiments of the present invention based on similar aspects in the foregoing embodiment of the present invention.

Based on the foregoing network architecture, in the solutions in the embodiments of the present invention, network resource orchestration can be implemented by interaction between a first management unit and a second management unit. The first management unit is mainly used for network resource orchestration, and the second management unit is mainly used for network resource management. It may be understood that devices having a network resource orchestration function may all be referred to as a first management network element. Similarly, devices having a network resource management function may all be referred to as a first management network element. In an example, when the network architecture shown in FIG. 1 is applied, the first management unit may be an NO, an SO, an OSS, an NM, or an NFVO. The second management unit may be an NO, an NM, an EM, a VNFM, or a network function controller (NF controller). The network function controller may also be referred to as a network function manager. For example, when the first management unit is an NO or an SO, the second management unit is an NM, an NFVO, or an EM. For another example, when the first management unit is an NM, the second management unit is an EM, an NF controller, or a VNFM. For another example, when the first management unit is an NFVO, the second management unit is a VNFM, an EM, or an NF controller.

Embodiment 1 of the present invention provides a network resource orchestration method. FIG. 2 is a schematic flowchart of a network resource orchestration method according to Embodiment 1 of the present invention. As shown in FIG. 2, the method in this embodiment includes the following steps.

Step 101: A first management unit receives information about a network resource from a second management unit, where the information about the network resource includes capability information of the network resource, and the capability information of the network resource is used to indicate a function or a feature of the network resource.

In an example, the first management unit may obtain the information about the network resource in any one of the following manners:

In a first manner, the first management unit may receive a registration request message from the second management unit, where the registration request message carries the information about the network resource, and the registration request message is used to register the network resource.

In a second manner, the first management unit may send a query request message to the second management unit, where the query request message is used to request the information about the network resource. The second management unit determines the information about the network resource based on the query request message, adds the determined information about the network resource to a query response message, and sends the query response message to the first management unit. Correspondingly, the first management unit receives the query response message.

In this embodiment, the capability information of the network resource is used to indicate the function or the feature of the network resource, and the capability information of the network resource is mainly used for network resource orchestration. The capability information of the network resource hides other properties of the network resource (for example, a provider, a version, and the like of the network resource) that the first management unit does not need to perceive as an orchestration unit. The first management unit needs to learn only that a network resource has a capability, and does not need to pay attention to other properties of the network resource. The network resource in this embodiment and the following embodiments may be specifically an NF, a network service (Network Service, NS for short), and a network (network) or a network element (Network Element, NE for short). The following embodiments mainly use an example in which the network resource is an NF for description, and the NF is usually indicated in a form of an NF class (NF class) or an NF instance (NF instance). For example, an MME NF can provide a mobility management capability. The NF class identifies an NF instance class and may be specifically an NF template, an NF model, or a descriptor.

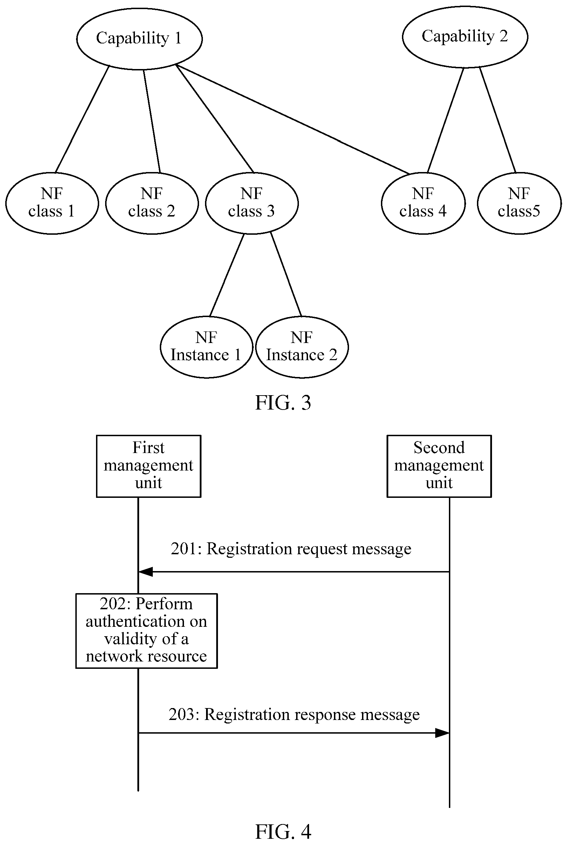

A network resource may have one or more capabilities, and different network resources may have a same capability. FIG. 3 is a schematic diagram of a network resource capability. As shown in FIG. 3, an NF class 1, an NF class 2, and an NF class 3 all have a same capability, an NF class 4 has two capabilities: a capability 1 and a capability 2, and an NF class 5 has the capability 2. Two NF instances are deployed for the NF class 3: an NF instance 1 and an NF instance 2. The NF instance 1 and the NF instance 2 have a same capability, and the capability is the same as the capability of the NF class 3. To be specific, a plurality of NF instances deployed based on a same NF class have a same capability.

In this embodiment, the capability information of the network resource is a capability identifier or capability description information of the network resource, the capability identifier of the network resource is used to uniquely identify a capability of the network resource, and the capability description information of the network resource is used to describe the capability of the network resource. When the capability information of the network resource is the capability description information of the network resource, the first management unit may allocate an identifier to the capability of the network resource based on the capability description information of the network resource.

In addition to the capability information of the network resource, the information about the network resource further includes at least one of the following information: an identifier, status information, and usage information of the network resource. The identifier of the network resource is used to uniquely identify the network resource, and the identifier of the network resource may be specifically an identifier of an NF class or an identifier of an NF instance. The status information of the network resource is used to indicate whether the network resource can be used. For an NF class, status information of the NF class may further include whether an NF instance is deployed for the NF class. The usage information of the network resource is used to indicate whether the network resource is used.

Step 102: The first management unit performs network resource orchestration based on the information about the network resource.

In an example, the first management unit may perform network resource orchestration based on a service requirement and the information about the network resource. For example, the first management unit determines, based on the service requirement and the information about the network resource, an identifier of a target network resource satisfying the service requirement or capability information of the target network resource. Then, the first management unit sends an instance obtaining request message to the second management unit. The instance obtaining request message is used to request a target instance that is corresponding to the identifier of the target network resource or the capability information of the target network resource. The instance obtaining request message includes the identifier of the target network resource or the capability information of the target network resource.

The service requirement is carried in a service request message or a network slice request message received by the first management unit. After receiving the instance obtaining request message, the second management unit determines, based on the identifier of the target network resource or the capability information of the target network resource, the target instance satisfying a condition, and returns the target instance to the first management unit. There may be one or more target instances satisfying the condition.

In this embodiment, the first management unit receives the information about the network resource from the second management unit, where the information about the network resource includes the capability information of the network resource, and performs network resource orchestration based on the information about the network resource, thereby implementing automatic network resource orchestration, improving network resource orchestration efficiency, and satisfying a requirement of fast service deployment.

Based on Embodiment 1, Embodiment 2 of the present invention provides a method for obtaining the information about the network resource. FIG. 4 is a schematic communication diagram of a method for obtaining information about a network resource according to Embodiment 2 of the present invention. As shown in FIG. 4, the method provided in this embodiment may include the following steps.

Step 201: The second management unit sends a registration request message to the first management unit, where the registration request message includes the information about the network resource.

The registration request message is used to register the network resource, and the registration request message may also be referred to as a notification message or another name. When the second management unit adds a new network resource, the second management unit sends the registration request message to the first management unit. Specifically, the registration request message is used to register an NF class or an NF instance.

When an NF class is registered, the registered NF class may be a newly added NF class or an updated NF class. The information about the network resource included in the registration request message is specifically capability information of the registered NF class and at least one of an identifier, version information, status information, and usage information of the registered NF class. The capability information of the registered NF class is specifically a capability identifier or capability description information of the registered NF class.

When an NF instance is registered, the registered NF instance is a newly deployed NF instance. The information about the network resource included in the registration request message is specifically capability information of the registered NF instance and at least one of an identifier, status information, and usage information of the registered NF instance.

Step 202: The first management unit performs authentication on validity of the information about the network resource.

When an NF class is registered, after receiving the registration request message, the first management unit performs authentication on validity of the registered NF class and records information about the registered NF class. When an NF instance is registered, after receiving the registration request message, the first management unit performs authentication on validity of the registered NF instance and records information about the registered NF instance.

Step 203: The first management unit sends a registration response message to the second management unit.

After authenticating validity of the information about the network resource, the first management unit sends the registration response message to the second management unit, to notify the second management unit that the network resource is successfully registered.

In this embodiment, step 202 and step 203 are optional steps. After receiving the registration request message, the first management unit may alternatively not perform authentication on validity of the network resource, and may not return the registration response message to the second management unit. After a particular time, the second management unit defaults that the first management unit receives the registration request message. After receiving the registration request message, the first management unit may alternatively return the registration response message to the second management unit. Optionally, the registration response message may include no information, or may include identification information of the network resource and/or a capability identifier of the network resource.

In this embodiment, the second management unit actively sends the capability information of the network resource and other information to the first management unit, so that the first management unit subsequently performs network resource orchestration based on the capability information of the network resource.

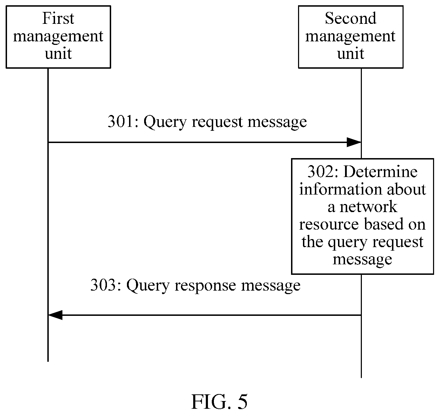

Based on Embodiment 1, Embodiment 3 of the present invention provides a method for obtaining the information about the network resource. FIG. 5 is a schematic communication diagram of a method for obtaining information about a network resource according to Embodiment 3 of the present invention. As shown in FIG. 5, the method provided in this embodiment may include the following steps.

Step 301: The first management unit sends a query request message to the second management unit, where the query request message is used to request to obtain the information about the network resource.

In this embodiment, the first management unit sends the query request message to the second management unit, to request to obtain the information about the network resource. In a first implementation, the query request message carries no query condition. In a second implementation, the query request message carries a query condition.

Step 302: The second management unit determines the information about the network resource based on the query request message.

In an example, the second management unit may determine the information about the network resource in any one of the following manners:

In a first implementation, after receiving the query request message, the second management unit determines, based on the query request message, that network resources that the first management unit requests to query are all locally stored network resources, adds information about all the locally stored network resources to a query response message, and sends the query response message to the first management unit. All the locally stored network resources of the second management unit are all registered NF classes and NF instances of the second management unit.

In a second implementation, the query request message carries a query condition, and the query condition is a condition that the network resource that the first management unit needs to obtain needs to satisfy. After receiving the query request message, the second management unit needs to determine, based on the query condition, a network resource satisfying a condition in the locally stored network resources, adds information about the network resource satisfying the query condition to the query response message, and sends the query response message to the first management unit. Optionally, the query condition may be specifically the capability information of the network resource. After receiving the query request message, the second management unit determines, based on the capability information, a network resource satisfying the capability information in all the locally stored network resources, adds information about the network resource satisfying the capability requirement to the query response message, and sends the query response message to the first management unit.

The capability information may also be understood as capability requirement information, and may be specifically a capability identifier or capability description information. When the capability requirement information is the capability identifier, before sending the query request message to the second management unit, the first management unit needs to obtain the capability information of the network resource. In an implementation, when the second management unit adds a new network resource, the second management unit recognizes whether the newly added network resource provides a new capability, where the newly added network resource may be a newly added NF class and a newly added NF instance. When the newly added network resource provides a new capability, the second management unit sends a capability registration request message to the first management unit, where the capability registration request message is used to request to register the newly added capability, and the capability registration request message carries information about the newly added capability. The information about the newly added capability is an identifier of the newly added capability or description information of the newly added capability. When the information about the newly added capability is the description information of the newly added capability, optionally, the second management unit allocates an identifier to the newly added capability based on the description information of the newly added capability.

Step 303: The second management unit sends a query response message to the first management unit, where the query response message includes the information about the network resource.

Optionally, after receiving the capability registration request message, the second management unit performs authentication on validity of the information about the newly added capability, and returns a capability registration response message to the first management unit. Optionally, the capability registration response message includes the identifier of the newly added capability.

In this embodiment, the first management unit sends the query request message to the second management unit to obtain the capability information of the network resource and other information, so that the first management unit subsequently performs network resource orchestration based on the capability information of the network resource.

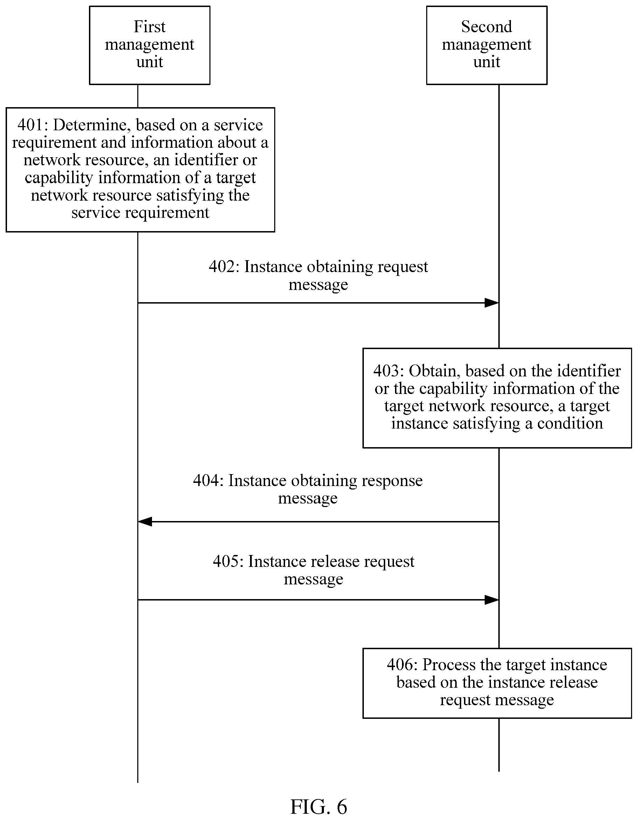

Based on Embodiment 1 to Embodiment 3, Embodiment 4 of the present invention provides a network orchestration method. FIG. 6 is a schematic communication diagram of a network resource orchestration method according to Embodiment 4 of the present invention. As shown in FIG. 6, the method provided in this embodiment may include the following steps.

Step 401: The first management unit determines, based on a service requirement and the information about the network resource, an identifier or capability information of a target network resource satisfying the service requirement.

In an example, the service requirement is, for example, an SLA or service type information. The first management unit determines, based on the SLA, the service type information, and the like, the identifier or the capability information of the target network resource satisfying the service requirement. The target network resource may be specifically an NF class or an NF instance, and the identifier of the target network resource may be specifically an identifier of the NF class or an identifier of the NF instance. In step 401, a result determined by the first management unit based on the service requirement and the information about the network resource may be an NF class, an NF instance, or a capability satisfying the requirement.

In a first manner, the first management unit determines, based on the service requirement and capability information of an NF class, an NF class satisfying the requirement, adds an identifier of the NF class to an instance obtaining request message, and sends the instance obtaining request message to the second management unit. Optionally, the instance obtaining request message further includes information such as a version of the NF class and a location and a size of an instance that needs to be obtained. After receiving the instance obtaining request message, the second management unit determines, based on the information about the NF class and the information about the instance that needs to be obtained that are included in the instance obtaining request message, whether an existing NF instance satisfies the requirement and can be used. If there is an NF instance that can be used, the second management unit adds information about the NF instance that can be used to an instance obtaining response message and sends the instance obtaining response message to the first management unit. There may be one or more NF instances that can be used. If existing NF instances include no NF instance that can be used, the second management unit requests, based on the identifier of the NF class, to deploy one or more NF instances satisfying the condition, adds information about the deployed NF instance to the instance obtaining response message, and sends the instance obtaining response message to the first management unit.

In a second implementation, the first management unit determines, based on the service requirement and capability information of an NF instance, an NF instance satisfying the requirement, adds an identifier of the NF instance to an instance obtaining request message, and sends the instance obtaining request message to the second management unit. Optionally, the instance obtaining request message further includes a size, a location, access information, and the like of the NF instance. The second management unit determines, based on the information about the NF instance included in the instance obtaining request message, an NF instance satisfying the condition, adds information about the determined NF instance to an instance obtaining response message, and sends the instance obtaining response message to the first management unit.

In a third implementation, the first management unit determines, based on the service requirement and capability information of a locally stored network resource, a capability satisfying the requirement, adds determined capability information to an instance obtaining request message, and sends the instance obtaining request message to the second management unit. The capability information may be a capability identifier and/or capability description information. Optionally, the instance obtaining request message further includes a size, a location, access information, and the like of an NF instance that needs to be obtained. The second management unit determines, based on the capability information and the information about the NF instance that needs to be obtained that are carried in the instance obtaining request message, whether existing NF instances include an NF instance that can be used. If there is an NF instance that can be used, the second management unit adds information about the NF instance that can be used to an instance obtaining response message, and sends the instance obtaining response message to the first management unit. If existing NF instances include no NF instance that can be used, the second management unit requests, based on the capability information carried in the obtaining request message, to deploy one or more NF instances having the capability, adds information about a determined NF instance to the instance obtaining response message, and sends the instance obtaining response message to the first management unit.

Step 402: The first management unit sends an instance obtaining request message to the second management unit, where the instance obtaining request message includes the identifier of the target network resource or the capability information of the target network resource, and the instance obtaining request message is used to request to obtain a target instance that is corresponding to the identifier of the target network resource or the capability information of the target network resource.

It should be noted that the instance obtaining request message may be specifically an instance creation request message, an instance update request message, or an instance using request message. The instance creation request message is used to request to create one or more new instances, the instance update request message is used to request to update one or more instances already created, and the instance using request message is used to request to allow to use an instance.

Step 403: The second management unit determines, based on the identifier or the capability information of the target network resource, the target instance satisfying a condition.

Step 404: The second management unit sends an instance obtaining response message to the first management unit, where the instance obtaining response message includes information about the target instance.

Step 405: The first management unit sends an instance release request message to the second management unit, where the instance processing request message includes an identifier of the target instance.

After the target instance is obtained, when the target instance does not need to be used at a particular time because of service deletion or slice deletion, the first management unit sends the instance release request message to the second management unit. The instance release request message includes the identifier of the target instance, and the instance release request message is used to request to delete or release the target instance. Optionally, the instance release request message further includes an operation type identifier, and the operation type identifier is used to indicate an operation type of processing the target instance by the second management unit.

Step 406: The second management unit processes the target instance based on the instance release request message.

After the instance release request message is received, if the instance release request message carries no operation type identifier, the second management unit releases the target instance, so that a status of the target instance changes to an unusable state. Optionally, the second management unit may autonomously determine to delete the target instance. If the instance release request message carries an operation type identifier, the second management unit processes the target instance based on an operation indicated by the operation type identifier. Optionally, the operation type identifier is a deletion operation identifier or a release operation identifier. When the operation type identifier is a deletion operation identifier, the second management unit deletes the target instance based on the deletion operation identifier. When the operation type identifier is a release operation identifier, the second management unit releases the target instance based on the release operation identifier.

The foregoing mainly describes the solutions provided in the embodiments of the present invention from the perspective of interaction between network elements. It may be understood that to perform the foregoing functions, each network element, for example, the first management unit and the second management unit, includes a corresponding hardware structure and/or software module for performing the functions. A person skill in the art should be easily aware that, the units and algorithm steps in the examples described with reference to the embodiments disclosed in this specification may be implemented by hardware or a combination of hardware and computer software. Whether a function is implemented by hardware or in a manner of driving hardware by a computer software depends on a particular application and a design constraint condition of the technical solution. A person skilled in the art may use different methods to implement the described functions for each particular application, but it should not be considered that the implementation goes beyond the scope of the present invention.

In the embodiments of the present invention, functional modules of the first management unit, the second management unit, and the like may be divided based on the foregoing method example. For example, each function module may be obtained through division based on a corresponding function, or two or more functions may be integrated into one processing module. The integrated module may be implemented in a form of hardware, or may be implemented in a form of a functional module of software. It should be noted that, the module division in the embodiments of the present invention is an example and is only logical function division. There may be another division manner in actual implementation.

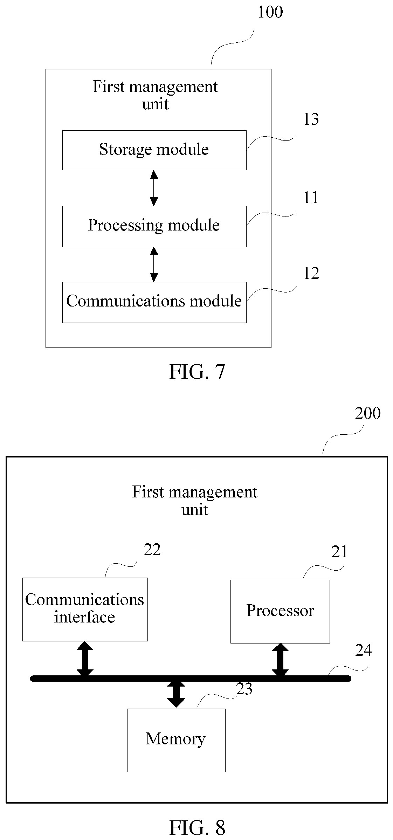

When an integrated unit is used, FIG. 7 is a possible schematic structural diagram of the first management unit in the foregoing embodiment. A first management unit 100 includes: a processing module 11 and a communications module 12. The processing module 11 is configured to control and manage an operation of the first management unit 100. For example, the processing module 11 is configured to support the first management unit 100 in performing the method shown in FIG. 2, FIG. 4, FIG. 5, and FIG. 6, and/or is configured to perform another process of the technology described in this specification. The communications module 11 is configured to support the first management unit in communicating with another network entity, for example, communicating with the second management unit shown in FIG. 2, FIG. 4, FIG. 5, and FIG. 6. The first management unit may further include a storage module 13, configured to store program code and data of the first management unit.

The processing module 11 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processor can implement or execute various example logical blocks, modules, and circuits that are described with reference to the content disclosed in the present invention. Alternatively, the processor may be a combination for implementing a computing function, for example, a combination of one or more microprocessors or a combination of the DSP and a microprocessor. The communications module 12 may be a transceiver circuit, a communications interface, or the like. The storage module 13 may be a memory.

When the processing module 11 is a processor, the communications module 12 is a communications interface, and when the storage module 13 is a memory, the first management unit in this embodiment of the present invention may be a first management unit shown in FIG. 8.

Referring to FIG. 8, the first management unit 200 includes: a processor 21, a communications interface 22, a memory 23, and a bus 24. The communications interface 22, the processor 21, and the memory 23 are interconnected by using the bus 24. The bus 24 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of indication, the bus is indicated by using only one bold line in FIG. 8. However, it does not indicate that there is only one bus or only one type of bus.

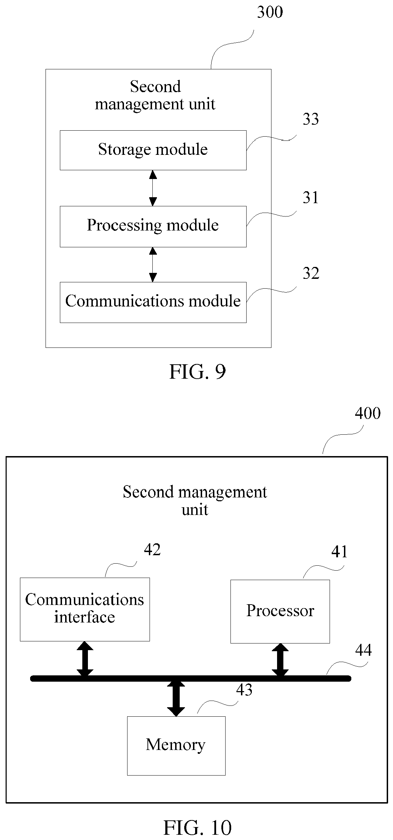

When an integrated unit is used, FIG. 9 is a possible schematic structural diagram of the second management unit in the foregoing embodiment. A second management unit 300 includes: a processing module 31 and a communications module 32. The processing module 31 is configured to control and manage an operation of the second management unit 300. For example, the processing module 31 is configured to support the second management unit 300 in performing the method shown in FIG. 2, FIG. 4, FIG. 5, and FIG. 6, and/or is configured to perform another process of the technology described in this specification. The communications module 32 is configured to support the second management unit 300 in communicating with another network entity, for example, communicating with the first management unit shown in FIG. 2, FIG. 4, FIG. 5, and FIG. 6. The second management unit 300 may further include a storage module 33, configured to store program code and data of the second management unit.

The processing module 31 may be a processor or a controller, for example, may be a CPU, a general-purpose processor, a DSP, an ASIC, a field programmable gate array (FPGA), or another programmable logic device, a transistor logic device, a hardware component, or any combination thereof. The processor can implement or execute various example logical blocks, modules, and circuits that are described with reference to the content disclosed in the present invention. Alternatively, the processor may be a combination for implementing a computing function, for example, a combination of one or more microprocessors or a combination of the DSP and a microprocessor. The communications module 32 may be a transceiver circuit, a communications interface, or the like. The storage module 33 may be a memory.

When the processing module 31 is a processor, the communications module 32 is a communications interface, and when the storage module 33 is a memory, the second management unit in this embodiment of the present invention may be a second management unit shown in FIG. 10.

Referring to FIG. 10, the second management unit 400 includes: a processor 41, a communications interface 42, a memory 43, and a bus 44. The communications interface 42, the processor 41, and the memory 43 are interconnected by using the bus 44. The bus 44 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of indication, the bus is indicated by using only one bold line in FIG. 10. However, it does not indicate that there is only one bus or only one type of bus.

The methods or algorithm steps described with reference to the content disclosed in the present invention may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. A storage medium used as an example is coupled to the processor, so that the processor can read information from the storage medium, and can write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A network resource orchestration method, comprising:
receiving, by a first management unit, information about a network resource from a second management unit, wherein the information about the network resource comprises capability information of the network resource, and the capability information of the network resource is used to indicate a function or a feature of the network resource; and
performing, by the first management unit, network resource orchestration based on the information about the network resource.

2. The method according to claim 1, wherein the receiving, by a first management unit, information about a network resource from a second management unit comprises:
receiving, by the first management unit, a registration request message from the second management unit, wherein the registration request message is used to register the network resource, and the registration request message comprises the information about the network resource.

3. The method according to claim 1, wherein the method further comprises:
sending, by the first management unit, a query request message to the second management unit, wherein the query request message is used to request the information about the network resource; and
the obtaining, by a first management unit, information about a network resource from a second management unit comprises:
receiving, by the first management unit, a query response message from the second management unit, wherein the query response message comprises the information about the network resource.

4. The method according to claim 3, wherein the query request message comprises the capability information of the network resource, to determine the information about the network resource.

5. The method according to any one of claims 1 to 4, wherein the performing, by the first management unit, network resource orchestration based on the information about the network resource comprises:
determining, by the first management unit based on a service requirement and the information about the network resource, an identifier of a target network resource satisfying the service requirement or capability information of the target network resource; and
sending, by the first management unit, an instance obtaining request message to the second management unit, wherein the instance obtaining request message comprises the identifier of the target network resource or the capability information of the target network resource, and the instance obtaining request message is used to request a target instance that is corresponding to the identifier of the target network resource or the capability information of the target network resource.

6. The method according to any one of claims 1 to 5, wherein the information about the network resource further comprises at least one of the following information: an identifier of the network resource, status information of the network resource, or usage information of the network resource.

7. The method according to any one of claims 1 to 6, wherein the capability information of the network resource is a capability identifier of the network resource or capability description information of the network resource.

8. A network resource orchestration method, comprising:
sending, by a second management unit, information about a network resource to a first management unit, wherein the information about the network resource comprises capability information of the network resource, and the capability information of the network resource is used to indicate a function or a feature of the network resource, so that the first management unit performs network resource orchestration based on the information about the network resource.

9. The method according to claim 8, wherein the sending, by a second management unit, information about a network resource to a first management unit comprises:
sending, by the second management unit, a registration request message to the first management unit, wherein the registration request message is used to register the network resource, and the registration request message comprises the information about the network resource.

10. The method according to claim 8, wherein the method further comprises:
receiving, by the second management unit, a query request message from the first management unit, wherein the query request message is used to request the information about the network resource; and
determining, by the second management unit, the information about the network resource based on the query request message; and
the sending, by a second management unit, information about a network resource to a first management unit comprises:
sending, by the second management unit, a query response message to the first management unit, wherein the query response message comprises the information about the network resource.

11. The method according to claim 10, wherein the query request message comprises the capability information of the network resource; and
the determining, by the second management unit, the information about the network resource based on the query request message comprises:
determining, by the second management unit based on the capability information, the information about the network resource that satisfies the capability information.

12. The method according to any one of claims 8 to 11, wherein the method further comprises:
receiving, by the second management unit, an instance obtaining request message from the first management unit, wherein the instance obtaining request message comprises an identifier of a target network resource or capability information of the target network resource, and the instance obtaining request message is used to request a target instance that is corresponding to the identifier of the target network resource or the capability information of the target network resource.

13. The method according to any one of claims 8 to 12, wherein the information about the network resource further comprises at least one of the following information: an identifier of the network resource, status information of the network resource, or usage information of the network resource.

14. The method according to any one of claims 8 to 13, wherein the capability information of the network resource is a capability identifier of the network resource or capability description information of the network resource.

15. A first management unit, comprising: a processing module and a communications module, wherein
the processing module is configured to receive information about a network resource from a second management unit by using the communications module, wherein the information about the network resource comprises capability information of the network resource, and the capability information of the network resource is used to indicate a function or a feature of the network resource; and is configured to perform network resource orchestration based on the information about the network resource.

16. The management unit according to claim 15, wherein the processing module is specifically configured to receive a registration request message from the second management unit by using the communications module, wherein the registration request message is used to register the network resource, and the registration request message comprises the information about the network resource.

17. The management unit according to claim 15, wherein the processing module is further configured to send a query request message to the second management unit by using the communications module, wherein the query request message is used to request the information about the network resource; and
the processing module is specifically configured to receive a query response message from the second management unit by using the communications module, wherein the query response message comprises the information about the network resource.

18. The management unit according to claim 17, wherein the query request message comprises the capability information of the network resource, to determine the information about the network resource.

19. The management unit according to any one of claims 15 to 18, wherein the processing module is specifically configured to:
determine, based on a service requirement and the information about the network resource, an identifier of a target network resource satisfying the service requirement or capability information of the target network resource; and
send an instance obtaining request message to the second management unit by using the communications module, wherein the instance obtaining request message comprises the identifier of the target network resource or the capability information of the target network resource, and the instance obtaining request message is used to request a target instance that is corresponding to the identifier of the target network resource or the capability information of the target network resource.

20. The management unit according to any one of claims 15 to 19, wherein the information about the network resource further comprises at least one of the following information: an identifier of the network resource, status information of the network resource, or usage information of the network resource.

21. The management unit according to any one of claims 15 to 20, wherein the capability information of the network resource is a capability identifier of the network resource or capability description information of the network resource.

22. A second management unit, comprising: a processing module and a communications module, wherein
the processing module is configured to send information about a network resource to a first management unit by using the communications module, wherein the information about the network resource comprises capability information of the network resource, and the capability information of the network resource is used to indicate a function or a feature of the network resource, so that the first management unit performs network resource orchestration based on the information about the network resource.

23. The management unit according to claim 22, wherein the processing module is specifically configured to send a registration request message to the first management unit by using the communications module, wherein the registration request message is used to register the network resource, and the registration request message comprises the information about the network resource.

24. The management unit according to claim 22, wherein the processing module is further configured to receive a query request message from the first management unit by using the communications module, wherein the query request message is used to request the information about the network resource; and is configured to determine the information about the network resource based on the query request message; and
the processing module is specifically configured to send a query response message to the first management unit by using the communications module, wherein the query response message comprises the information about the network resource.

25. The management unit according to claim 24, wherein the query request message comprises the capability information of the network resource; and
the processing module is specifically configured to determine, based on the capability information, the information about the network resource that satisfies the capability information.

26. The management unit according to any one of claims 22 to 25, wherein the processing module is further configured to receive an instance obtaining request message from the first management unit by using the communications module, wherein the instance obtaining request message comprises an identifier of a target network resource or capability information of the target network resource, and the instance obtaining request message is used to request a target instance that is corresponding to the identifier of the target network resource or the capability information of the target network resource.

27. The management unit according to any one of claims 22 to 26, wherein the information about the network resource further comprises at least one of the following information: an identifier of the network resource, status information of the network resource, or usage information of the network resource.

28. The management unit according to any one of claims 22 to 27, wherein the capability information of the network resource is a capability identifier of the network resource or capability description information of the network resource.

29. A communications system, wherein the system comprises the first management unit according to any one of claims 15 to 21, and the second management unit according to any one of claims 22 to 28.
